## Europäisches Patentamt

## European Patent Office

## Office européen des brevets

(11) Veröffentlichungsnummer: **0 147 582**
**B1**

(12) **EUROPÄISCHE PATENTSCHRIFT**

(45) Veröffentlichungstag der Patentschrift:
16.09.87

(51) Int. Cl.⁴: **B 60 T 7/04**

(21) Anmeldenummer: **84113408.3**

(22) Anmeldetag: **07.11.84**

(54) **Feststellvorrichtung für zwei nebeneinander angeordnete Pedale, insbesondere Bremspedale.**

(30) Priorität: **18.11.83 US 553018**

(43) Veröffentlichungstag der Anmeldung:
**10.07.85 Patentblatt 85/28**

(45) Bekanntmachung des Hinweises auf die Patenterteilung:
**16.09.87 Patentblatt 87/38**

(84) Benannte Vertragsstaaten:
**DE FR GB**

(56) Entgegenhaltungen:
**DE - A - 2 310 897**
**DE - A - 2 352 224**
**US - A - 2 443 331**
**US - A - 2 497 293**
**US - A - 2 504 258**
**US - A - 2 535 718**
**US - A - 2 612 059**
**US - A - 2 881 872**

(73) Patentinhaber: **DEERE & COMPANY, 1 John Deere Road, Moline Illinois 61265 (US)**

(72) Erfinder: **Kaukaskle, Donald Charles, 895 Valentine Drive, Dubuque Iowa 52001 (US)**

(74) Vertreter: **Feldmann, Bernhard et al, DEERE & COMPANY European Office, Patent Department Steubenstrasse 36-42 Postfach 503, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Feststellvorrichtung für zwei nebeneinander angeordnete Pedalarme aufweisende verschwenkbare Pedale, insbesondere Bremspedale, die über in Zahnreihen eingreifende Sperrteile feststellbar sind, wobei die Sperrteile über Federn in Richtung auf die Zahnreihen vorgespannt, auf einer drehbaren Welle gelagert und über die Welle in ihre die Pedale freigebenden Stellungen verschwenkbar sind.

Eine bekannte Feststellvorrichtung (John Deere Betriebsanleitung für 6000 HI-Cycle OM-N 159 558, Ausgabe JO 1980) dient zum Feststellen der Bremsen eines abgestellten Arbeitsfahrzeugs. Bei nicht betätigter Bremse liegt der einzige Sperrteil auf dem Kabinenboden auf. Bei betätigter Bremse kann der Sperrteil von Hand um die am Kabinenboden befestigte Welle so verschwenkt werden, dass sein freies Ende in die Zahnreihen der Pedalarme eingreift. Zum Lösen der Feststellvorrichtung müssen die Bremspedale nochmals um einen weiteren Betrag heruntergetreten werden. Damit werden beide Bremsen gemeinsam festgesetzt.

Bei in der Bauwirtschaft einsetzbaren Kettenfahrzeugen wird die Lenkung des Fahrzeugs vielfach dadurch bewirkt, dass eine Kette durch Betätigung eines Bremspedals abgetrennt wird (US-A-3 494 449). Dabei kann der Bremsmechanismus einer unterschiedlichen Abnutzung unterliegen, so dass die beiden Bremspedale um unterschiedliche Beträge heruntergetreten werden müssen, bis die zugehörige Bremse voll greift. Würde man das vorstehend für Arbeitsmaschinen geschilderte System oder ein ähnliches für derartige Kettenfahrzeuge einsetzen, so würde bei unterschiedlichen Pedalwegen bereits eine Bremse voll greifen bevor die andere voll greifen kann.

Andererseits ist bereits eine Feststellvorrichtung (DE-A-2 352 224), von der die Erfindung ausgeht, bekannt geworden, bei der an die Pedalarme Zahnreihen aufweisende Stangen angelenkt sind und bei der in die Zahnreihen Sperrklinken unter der Wirkung von Federn eingreifen können. Die Sperrklinken sind auf einer Welle schwenkbar gelagert und können durch Drehen der Welle über eine Zugstange aus den Zähnen der Zahnenreihen weggeschwenkt werden, wozu an der Welle Radialstifte angeordnet sind, die gegen Anschläge an den Sperrklinken zur Anlage gebracht werden können. Hierbei muss der Drehbereich der Welle so gross sein, dass die Radialstifte aus dem Wirkungsbereich der Sperrklinken fortgeschwenkt werden können, damit dise aufgrund der Federwirkung zum Feststellen der Pedale in die Zahnreihen eingreifen können. Bei Ermüden oder Bruch der Federn können die Sperrklinken nur noch aufgrund ihres Eigengewichtes in die Zahnreihen einfallen, so dass dann eine betriebssichere als Parkbremse dienende Sperrstellung nicht mehr gegeben ist. Hinzu kommt, dass durch blosses Anheben der Sperrklinken die Sperrstellung gelöst werden kann, so dass eine verkehrstechnisch erforderliche Betriebssicherheit nicht gegeben ist, wenn ein Zugang zu den Sperrklinken von aussen möglich ist.

Die mit der Erfindung zu lösende Aufgabe wird darin gesehen, die Feststellvorrichtung derart auszubilden, dass auch bei unterschiedlichen Pedalwegen, jedes Pedal bei voll angezogener Bremse festgesetzt werden kann und die Betriebssicherheit erhalten bleibt.

Diese Aufgabe ist gemäss der Erfindung durch die Merkmale des Patentanspruchs 1 gelöst worden. Auf diese Weise kann jedes Bremspedal festgestellt werden, wenn die zugehörige Bremse voll greift, so dass Unfallgefahren infolge von unterschiedlichem Verschleiss der einzelnen Bremssysteme vermieden sind. Hinzu kommt, dass bei Ausfall der Federn die Sperrklinken über die Welle in ihre Sperrstellung verschwenken können.

Zur begrenzt schwenkbaren Verbindung kann erfindungsgemäss jeder Sperrteil endseitig mit einer Hülse versehen sein, die auf der Welle drehbar angeordnet ist, wobei an der Welle Arme fest angeordnet sind, mit deren anderen Enden die Sperrteile begrenzt beweglich verbunden sind. Zweckmässig sind dabei zwischen den anderen Enden der Arme und den Sperrteilen die Federn vorgesehen.

Vorteilhaft kann in jedes Sperrteil je eine Schraube einschraubbar sein, deren anderes Ende sich durch eine Öffnung in den Armen erstreckt und gegen Herausfallen gesichert ist, wobei zwischen den Armen und den Sperrteilen auf den Schraubenschäften die Federn angeordnet sind.

Im einzelnen kann nach der Erfindung die Welle in einer Drehstellung, in der die Sperrteile in die Pedalarme einrasten können, feststellbar sein, wobei auf jedem Schaft der Schrauben zwischen Sperrteilen und Armen Abstandhalter vorgesehen sind. Damit kann der relative Schwenkbereich zwischen Sperrteilen und Armen positiv begrenzt werden.

Letztlich kann erfindungsgemäss an der Welle ein Handgriff angeschlossen sein, der in einer Endstellung der Welle feststellbar ist. Hierdurch kann die Feststellvorrichtung leicht betätigt und auch gegen unbefugtes Betätigen im lösenden Sinne gesichert werden.

In der Zeichnung ist ein nachfolgend näher erläutertes Ausführungsbeispiel der Erfindung dargestellt. Es zeigt:

Fig. 1 ein Bremspedal mit Feststellvorrichtung in Seitenansicht bei unbetätigter Bremse und

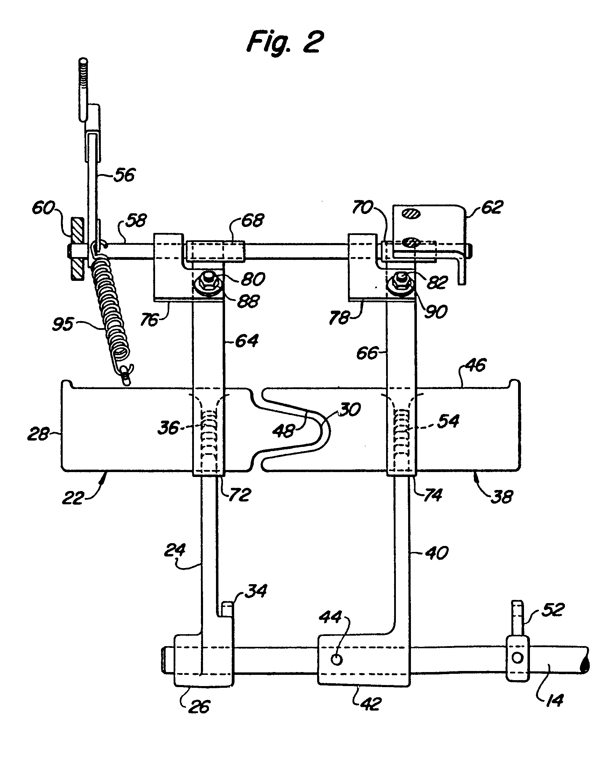

Fig. 2 die Anordnung nach Fig. 1 in Frontansicht.

In der Zeichnung ist eine Pedalanordnung 10 für zwei nebeneinander angeordnete Bremspedale dargestellt, wie sie zur Pedalsteuerung eines in der Bauwirtschaft einsetzbaren Kettenfahrzeuges Verwendung findet. Bei betätigter Bremse können diese Bremspedale über eine Feststellvorrichtung 12 gemeinsam in ihrer heruntergetretenen Stellung festgesetzt werden.

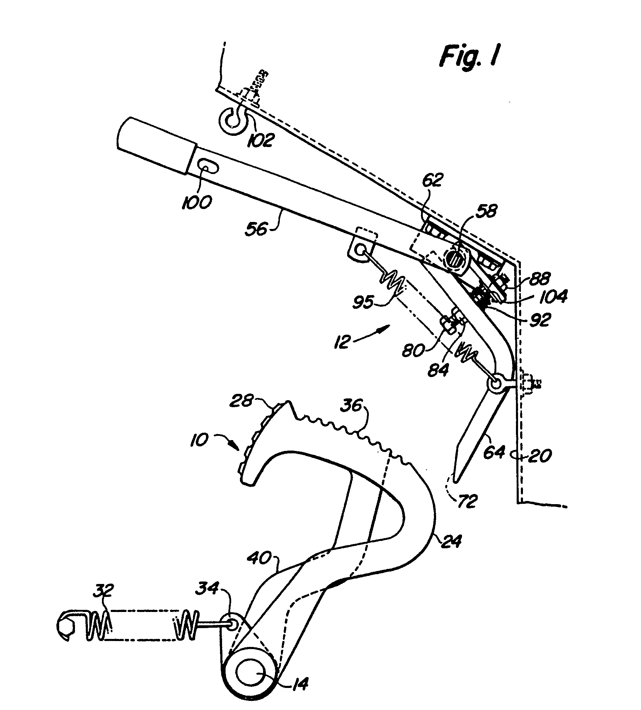

Im einzelnen besteht die Pedalanordnung 10 aus einer Querwelle 14, die in nicht dargestellten mit einem Rahmen 20 des Fahrzeuges fest verbundenen Auflagern gelagert ist, wobei ein rechtes Pedal 22 mit einem Pedalarm 24 versehen ist, der an seinem Ende einen Zylinderteil 26 aufweist, der wiederum auf der Querwelle 14 drehbar gelagert ist. Das dem Zylinderteil 26 abgelegene Ende des Pedalarmes 24 ist mit einer Tretfläche 28 verbunden, die eine nach links gerichtete Zunge 30 aufweist. Eine das Pedal in seine in Fig. 1 dargestellte Ausgangsstellung rückführende Feder 32 ist zwischen dem Rahmen 20 und einer Öse 34 vorgesehen, die sich von dem Zylinderteil 26 aus nach oben erstreckt. Desweiteren weist der Pedalarm 24 nahe der Tretfläche 28 noch eine Zahnreihe 36 auf, in die die Feststellvorrichtung 12, wie nachfolgend noch näher erläutert wird, eingreifen kann. Ein nicht gezeigtes Gestänge verbindet das Pedal 22 mit einem rechtsseitigen Bremsmechanismus. In ähnlicher Weise ist ein linkes Pedal 38 mit einem Pedalarm 40 ausgerüstet, dessen eines Ende in einen Zylinderteil 42 übergeht, der auf der Querwelle 14 über einen Halter 44 fest angeordnet ist. Das andere Ende des Pedalarms 40 nimmt eine Tretfläche 46 auf, in die in ihrem rechten Bereich ein Ausschnitt 48 eingearbeitet ist. In dem Ausschnitt 48 wird die Zunge 30 aufgenommen, wenn die Tretflächen 28 und 46 sich nebeneinander befinden, wie es in der Zeichnung dargestellt ist. Eine nicht dargestellte Rückholfeder ist zwischen dem Rahmen und einer Öse 52 vorgesehen, die an der Querwelle 14 fest angeordnet ist. Auch dieser Pedalarm 40 weist nahe der Tretfläche 46 eine Zahnreihe 54 auf, in die die Feststellvorrichtung 12 eingreifen kann, wenn das Pedal zum Betätigen der Bremse heruntergetreten ist.

Durch die besondere Ausbildung der Tretflächen 28 und 46 können die Pedale 22 und 38 gemeinsam aber auch unabhängig voneinander betätigt werden, wodurch die zugehörigen rechten und linken Bremsmechanismen bzw. Bremsen gemeinsam oder einzeln greifen.

Die Feststellvorrichtung 12 weist unter anderem eine Betätigungsvorrichtung mit einem Handgriff 56 auf, der an das eine Ende einer Welle 58 angeschweisst sein kann. Die Welle 58 selbst ist drehbar in mit dem Rahmen 20 fest verbundenen zueinander Abstand aufweisenden Auflagern 60 und 62 in einem Bereich gelagert, der oberhalb und mit Bezug auf die Fahrtrichtung vor der Pedalanordnung 10 liegt. Rechte und linke Sperrteile 64 und 66 in der Form von abgewinkelten Stangen sind auf der Welle 58 begrenzt schwenkbar gelagert, wozu einmal Hülsen 68 und 70 dienen, die mit den Enden der Sperrteile 64 und 66 verschweisst und auf der Welle 58 drehbar sind. Die Anordnung und Ausbildung der Sperrteile 64 und 66 ist dabei so getroffen, dass ihre entsprechenden unteren Enden 72 und 74 nur dann in die Zahnreihen 36 und 54 einrasten können, wenn sich der Handgriff 56 in seiner in der Zeichnung nicht dargestellten angehobenen oberen Stellung befindet und die Pedale 22 und 38 heruntergetreten wurden.

Damit die Sperrteile 64 und 66 begrenzt schwenkbar auf der Welle 58 angeordnet werden können, sind noch rechte und linke L-förmig ausgebildete Arme 76 und 78 vorgesehen, von denen jeweils ein Schenkel tangential auf die Welle 58 an Stellen neben den Hülsen 68 und 70 aufgeschweisst ist. Die anderen Schenkel der Arme 76 und 78 liegen mit Bezug auf die Fahrtrichtung vor den Sperrteilen 64 und 66, sind aber mit diesen verbunden. Hierzu dienen Schrauben 80 und 82, die in die Sperrteile 64 und 66 eingeschraubt und durch Gegenmuttern 84 gesichert sind. In der Zeichnung ist nur die rechte Gegenmutter 84 erkennbar. Die Schrauben 80 und 82 sind lose durch die anderen Schenkel der Arme 76 und 78 geführt und gegen Herausfallen durch Muttern 88 und 90 gesichert, die auf die Schrauben 80 und 82 aufgeschraubt sind. In dem Bereich zwischen den Sperrteilen 64 und 66 und den Armen 76 und 78 sind Federn 92, von denen nur die rechte als Spiralfeder ausgebildete dargestellt ist, auf die Schäfte der Schrauben 80 und 82 aufgeschoben. Dadurch ergibt sich eine in einer Richtung nachgiebige Verbindung zwischen den Sperrteilen 64 und 66 und den Armen 76 und 78. Zwischen dem Handgriff 56 und dem Rahmen 20 ist noch eine Rückholfeder 95 vorgesehen, die den Handgriff und damit die gesamte Feststellvorrichtung 12 in der in Fig. 1 wiedergegebenen Stellung hält, in der die Pedale 22 und 38 nicht festgesetzt sind.

Durch Verschwenken des Handgriffs 56 nach oben entgegen der Wirkung der Rückholfeder 95 und dem damit gleichzeitigen Einhergehen des Drehens der Welle 58 werden die Sperrelemente 64, 66 in ihre Feststellposition verschwenkt, in der die entsprechend rampenförmig ausgebildeten Enden 72 und 74 der Sperrteile 64, 66 in die Zahnreihen 36 und 54 der Pedalarme 24 und 40 eingreifen können, wenn die Pedale 22 und 38 zum Betätigen der Bremsen heruntergetreten werden. Damit können die Pedale 22 und 38 in diesen Positionen festgesetzt werden, und zwar sobald die Sperrteile 64 und 66 zwischen zwei Zähne der Zahnreihen 36 und 54 einrasten. Bei unterschiedlichen Pedalwegen, also in Fällen, bei denen ein Pedal tiefer heruntergetreten werden muss als das andere, um die volle Bremswirkung zu erhalten, wird das entsprechende Pedal einfach weiter heruntergetreten, wobei die zugehörige Zahnreihe auf das rampenförmige Ende des entsprechenden Sperrteils wirkt, wodurch das entsprechende Sperrteil nachgibt und nachfolgend in eine neue Stelle in der Zahnreihe einrastet.

Um ein unbefugtes Lösen der festgesetzten Pedale bzw. voll angezogenen Bremsen zu verhindern, kann in dem Handgriff 56 eine Öffnung 100 vorgesehen werden, die in der angehobenen Stellung des Handgriffs zu einer mit dem Rahmen 20 verbundenen Ösenschraube 102 ausgerichtet ist.

Damit kann in die Öse der Ösenschraube und die Öffnung ein Vorhängeschloss eingehängt werden. Zwei Abstandshalter 104, von denen nur der rechte in der Zeichnung dargestellt ist, wirken mit dem Vorhängeschloss zusammen und bewirken, dass der Betrag, um den sich die Sperrteile 64 und 66 gegenüber den Armen 76 und 78 bewegen können, begrenzt wird, so dass in der festgestellten Position die Sperrteile 64, 66 nicht ohne Drehen der Welle 58 aus den Zahnreihen 36, 54 ausrasten können. Die Abstandshalter 104 sind in den Federn 92 auf den Schrauben 80, 82 vorgesehen.

Die Wirkungsweise der Feststellvorrichtung dürfte aus der vorgenannten Beschreibung hervorgehen. Die Feststellvorrichtung lässt sich überall dort anwenden, wo durch verschwenkbare Teile eine Funktion ausgeübt wird. Sie macht es möglich, dass die Sperrteile infolge ihrer besonderen Anordnung an der Welle 58 unabhängig voneinander bewegt werden können, so dass die Pedale unabhängig voneinander oder gemeinsam festgestellt und wieder gemeinsam gelöst werden können. Eine Sicherung gegen unbefugtes Lösen ist ebenfalls vorhanden und zweckmässig, wenn das Fahrzeug unbeaufsichtigt auf dem jeweiligen Einsatzfeld abgestellt wird.

## Patentansprüche

1. Feststellvorrichtung für zwei nebeneinander angeordnete Pedalarme (24, 40) aufweisende verschwenkbare Pedale (22, 38), insbesondere Bremspedale, die über in Zahnreihen (36, 54) eingreifende Sperrteile (64, 66) feststellbar sind, wobei die Sperrteile (64, 66) über Federn (92) in Richtung auf die Zahnreihen (36, 54) vorgespannt, auf einer drehbaren Welle (58) gelagert und über die Welle (58) in ihre die Pedale (22, 38) freigebenden Stellungen verschwenkbar sind, dadurch gekennzeichnet, dass die Zahnreihen (36, 54) an den Pedalarmen (24, 40) vorgesehen und die Sperrteile (64, 66) mit der Welle (58) derart begrenzt schwenkbar verbunden sind, dass die Sperrteile (64, 66) in ihre Stellung, in der sie in die Zahnreihen (36, 54) einrasten können, durch manuelles Drehen der Welle (58) schwenkbar sind.

2. Feststellvorrichtung nach Anspruch 1, dadurch gekennzeichnet, dass jedes Sperrteil (64, 66) endseitig mit einer Hülse (68, 70) versehen ist, die auf der Welle (58) drehbar angeordnet ist, wobei an der Welle (58) Arme (76, 78) fest angeordnet sind, mit deren anderen Enden die Sperrteile (64, 66) begrenzt beweglich verbunden sind.

3. Feststellvorrichtung nach Anspruch 2, dadurch gekennzeichnet, dass zwischen den anderen Enden der Arme (76, 78) und den Sperrteilen (64, 66) die Federn (92) vorgesehen sind.

4. Feststellvorrichtung nach einem oder mehreren der vorherigen Ansprüche, dadurch gekennzeichnet, dass in jedes Sperrteil (64, 66) je eine Schraube (80, 82) einschraubbar ist, deren anderes Ende sich durch eine Öffnung in den Armen (76, 78) erstreckt und gegen Herausfallen gesichert ist, wobei zwischen den Armen und den Sperrteilen auf den Schraubenschäften die Federn (92) angeordnet sind.

5. Feststellvorrichtung nach einem oder mehreren der vorherigen Ansprüche, dadurch gekennzeichnet, dass die Welle (58) in einer Drehstellung, in der die Sperrteile (64, 66) in die Pedalarme (24, 40) einrasten können, feststellbar ist, wobei auf jedem Schaft der Schrauben (80, 82) zwischen Sperrteilen und Armen (76, 78) Abstandhalter (104) vorgesehen sind.

6. Feststellvorrichtung nach einem oder mehreren der vorherigen Ansprüche, dadurch gekennzeichnet, dass an der Welle (58) ein Handgriff (56) angeschlossen ist, der in einer Endstellung der Welle (58) feststellbar ist.

## Revendications

1. Dispositif de blocage pour deux pédales (22, 38) pivotantes situées côte à côte comportant des bras de pédale (24, 40), en particulier des pédales de frein, qui peuvent être bloquées au moyen d'éléments d'arrêt (64, 66) s'engageant dans des rangées de dents (36, 54), les élémentes d'arrêt (64, 66) étant précontraints, au moyen de ressorts (92), en direction des rangées de dents (36, 54), placés sur un arbre rotatif (58) et pouvant être amenés par pivotement, par l'intermédiaire de l'arbre (58), dans leurs positions débloquant les pédales (22, 38), caractérisé en ce que les rangées de dents (36, 54) sont prévues sur les bras de pédale (24, 40) et les éléments d'arrêt (64, 66) sont reliés à l'arbre (58) de façon à pouvoir effectuer une rotation limitée, et en ce que par rotation manuelle de l'arbre (58), les éléments d'arrêt (64, 66) sont pivotants dans leur position, dans laquelle ils peuvent s'encliqueter dans les rangées de dents (36, 54).

2. Dispositif de blocage suivant la revendication 1, caractérisé en ce que chaque élément d'arrêt (64, 66) comporte en bout une douille (68, 70) placée de façon à pouvoir tourner sur l'arbre (58), des bras (76, 78) étant placés fixement sur l'arbre (58), et les éléments d'arrêt (64, 66) étant reliés à leurs secondes extrémités de façon à pouvoir effectuer un mouvement limité.

3. Dispositif de blocage suivant la revendication 2, caractérisé en ce que les ressorts (92) sont prévus entre les secondes extrémités des bras (76, 78) et les éléments d'arrêt (64, 66).

4. Dispositif de blocage suivant une ou plusieurs des revendications précédentes, caractérisé en ce qu'il peut être vissé dans chaque élément d'arrêt (64, 66) une vis respective (80, 82) dont la seconde extrémité passe par une ouverture pratiquée dans les bras (76, 78) et est empêchée de tomber, les ressorts (92) étant placés entre les bras et les éléments d'arrêt sur les tiges des vis.

5. Dispositif de blocage suivant une ou plusieurs des revendications précédentes, caractérisé en ce que l'arbre (58) peut être bloqué dans une position de rotation dans laquelle les éléments d'arrêt (64, 66) peuvent s'encliqueter dans les bras de pédale (24, 40), des écarteurs (104) étant prévus sur chaque tige des vis (80, 82) entre les éléments d'arrêt et les bras (76, 78).

6. Dispositif de blocage suivant une ou plusieurs des revendications précédentes, caractérisé en ce qu'il est raccordé à l'arbre (58) une manette (56) qui peut être bloquée dans une position terminale de l'arbre (58).

## Claims

1. A locking device for two pivotable pedals (22, 38), in particular brake pedals, which are arranged side by side and which have pedal arms (24, 40) and which can be locked by way of locking members (64, 66) engaging into rows of teeth (36, 54), wherein the locking members (64, 66) are biased towards the rows of teeth (36, 54) by way of springs (92) and are mounted on a rotatable shaft (58) and can be pivoted by way of the shaft (58) into their positions of releasing the pedals (22, 38), characterized in that the rows of teeth (36, 54) are provided on the pedal arms (24, 40) and the locking members (64, 66) are limitedly pivotably connected to the shaft (58) in such a way that the locking members (64, 66) are

7 0 147 582 8

pivotable by manual rotation of the shaft (58) into their position, in which they can engage into the rows of teeth (36, 54).

2. A locking device according to claim 1, characterized in that each locking member (64, 66) is provided at the end with a sleeve (68, 70) which is arranged rotatably on the shaft (58), wherein fixedly arranged on the shaft (58) are arms (76, 78) to the other ends of which the locking members (64, 66) are limitedly movably connected.

3. A locking device according to claim 2, characterized in that the springs (92) are provided between the other ends of the arms (76, 78) and the locking members (64, 66).

4. A locking device according to one or more of the preceding claims characterised in that a respective screw (80, 82) can be screwed into each locking member (64, 66), the other end of each screw extending through an opening in the arms (76, 78) and being secured to prevent it from falling out, wherein the springs (92) are arranged between the arms and the locking members on the screw shanks.

5. A locking device according to one or more of the preceding claims characterised in that the shaft (58) can be locked in a rotational position in which the locking members (64, 66) can engage into the pedal arms (24, 40), wherein spacers (104) are provided on each shank of the screws (80, 82) between locking members and arms (76, 78).

6. A locking device according to one or more of the preceding claims characterised in that connected to the shaft (58) is a handle (56) which can be locked in a limit position of the shaft (58).

5

*Fig. 1*

# Fig. 2